# EUROPEAN PATENT APPLICATION

(11) **EP 3 410 786 A1**
(43) Date of publication of application: **05.12.2018**
(21) Application number: 18174545.6
(22) Date of filing: 28.05.2018
(51) Int. Cl.: H04W 52/02

(54) **WIRELESS COMMUNICATION APPARATUS, HOST TERMINAL, AND WIRELESS COMMUNICATION SYSTEM**

(30) Priority: 01.06.2017 JP 2017109361
(71) Applicant: Toshiba TEC Kabushiki Kaisha, Tokyo 141-8562 (JP)
(72) Inventor: Tsuchida, Sunao, Tokyo, 141-8562 (JP); Matsushita, Naohiro, Tokyo, 141-8562 (JP)
(74) Representative: Hoffmann Eitle

(57) **Abstract**

A wireless communication apparatus, which communicates wirelessly with a host terminal, includes a power supply circuit, a communication circuit, a wireless tag, and a control circuit. The power supply circuit includes a battery. The communication circuit outputs a carrier wave to the host terminal using electric power of the battery, and performs wireless communication with the host terminal. The wireless tag is a passive-type wireless tag which is activated by the carrier wave which is output from the host terminal, and performs the wireless communication with the host terminal. The control circuit switches from a sleep state, where the electric power from the battery is not supplied to the communication circuit, to an activated state where the electric power from the battery is supplied to the communication circuit, if the wireless tag is activated.

## Description

### CROSS-REFERENCE TO RELATED APPLICATION

This application is based upon and claims the benefit of priority from Japanese Patent Application No. P2017-109361, filed June 01, 2017, the entire contents of which are incorporated herein by reference.

### FIELD

Embodiments described herein relate generally to a wireless communication apparatus, a host terminal, and a wireless communication system.

### BACKGROUND

A sensor that measures a physical quantity such as sound or vibration is installed in a structure such as a road or a bridge pier. This type of sensor is connected to a wireless communication apparatus that includes a battery. The wireless communication apparatus acquires a result of measurement from the sensor, and transmits the result of the measurement to a host terminal that performs wireless communication with the wireless communication terminal.

The higher power consumption by the wireless communication apparatus, the higher the frequency with which the battery is replaced. For this reason, there is a wireless communication apparatus that stops a communication function and maintains a sleep state where power consumption is suppressed, until a point in time that is set is reached and that, if the point in time that is set is reached, activates the communication function and communicates with the host terminal.

However, a problem with the configuration as described above is that the result of the measurement by the sensor cannot be acquired from the wireless communication apparatus until the point in time that is set is reached.

### SUMMARY

One of the objects of the present invention is to improve prior art techniques and overcome at least some of the prior art problems as for instance above illustrated.

According to a first aspect of the present invention, it is provided a wireless communication apparatus configured to communicate wirelessly with a host terminal, comprising:
a power supply circuit configured to include a battery;
a communication circuit configured to output a carrier wave to the host terminal using electric power of the battery, and to perform wireless communication with the host terminal;
a passive-type wireless tag configured to be activated by a carrier wave which is output from the host terminal, and to perform wireless communication with the host terminal; and
a control circuit configured to switch from a sleep state, where the electric power from the battery is not supplied to the communication circuit, to an activated state where the electric power from the battery is supplied to the communication circuit, when the wireless tag is activated.

Optionally, in the wireless communication apparatus configured to communicate wirelessly with a host terminal according to the first aspect, the control circuit is configured to switch from the sleep state to the activated state when the wireless tag is activated and a specific command that is transmitted from the host terminal is received by the wireless tag.

Optionally, in the wireless communication apparatus configured to communicate wirelessly with a host terminal according to the first aspect, the control circuit is configured to switch from the activated state to the sleep state after a set time has expired, or after the apparatus receives a specific command.

Optionally, the wireless communication apparatus configured to communicate wirelessly with a host terminal of the first aspect, further comprises:
a memory in which information is stored,
wherein the control circuit is configured to transmit the information that is stored in the memory, to the host terminal using the communication circuit, when the control circuit switches the sleep state to the activated state.

Optionally, in the wireless communication apparatus configured to communicate wirelessly with a host terminal according to the first aspect, the information is measurement information received from a sensor.

Optionally, in the wireless communication apparatus configured to communicate wirelessly with a host terminal according to the first aspect, the measurement information is received from the sensor prior to the control circuit being switched to the activated state.

Optionally, in the wireless communication apparatus configured to communicate wirelessly with a host terminal according to the first aspect, the control circuit is configured to cause a sensor to obtain measurement information and to transmit the obtained measurement information to the host terminal using the communication circuit, when the control circuit switches the sleep state to the activated state.

According to a second aspect of the present invention, it is provided a host terminal configured to communicate wirelessly with a wireless communication apparatus, comprising:
a tag reader configured to cause a wireless tag, which is included in the wireless communication apparatus, to be activated and to perform wireless communication with the wireless tag;
a second communication circuit configured to perform wireless communication with a first communication circuit that is included in the wireless communication apparatus; and
a control circuit configured to transmit a specific command to the wireless tag of the wireless communication apparatus using the tag reader, to cause the first communication circuit of the wireless communication apparatus to be activated, and to cause the second communication circuit to perform the wireless communication with the first communication circuit.

Optionally, in the host terminal according to the second aspect of the invention, the control circuit is configured to transmit, in addition to the specific command, identification information to designate only a wireless tag with matching identification information.

According to a third aspect of the present invention, it is provided a wireless communication system that includes a host terminal and a wireless communication apparatus which communicates wirelessly with the host terminal,
wherein the wireless communication apparatus includes:
a power supply circuit configured to include a battery,
a first communication circuit configured to output a carrier wave to the host terminal using electric power of the battery and to perform wireless communication with the host terminal,
a passive-type wireless tag configured to be activated by a carrier wave which is output from the host terminal, and to perform the wireless communication with the host terminal; and
a first control circuit configured to switch from a sleep state where the electric power from the battery is not supplied to the first communication circuit to an activated state where the electric power from the battery is supplied to the first communication circuit, when the wireless tag is activated, and
wherein the host terminal includes:
a tag reader configured to cause the wireless tag to be activated and to perform wireless communication with the wireless tag, and
a second communication circuit configured to perform wireless communication with the first communication circuit.

Optionally, in the system according to the third aspect of the invention, the first control circuit is configured to switch from the activated state to the sleep state after a set time has expired, or after the apparatus receives a specific command.

Optionally, according to the system of the third aspect, the wireless communication apparatus further comprising a memory in which information is stored,
wherein the first control circuit is configured to transmit the information that is stored in the memory, to the host terminal using the first communication circuit, when the first control circuit switches the sleep state to the activated state.

Optionally, in the system according to the system of the third aspect, the information is measurement information received from a sensor.

Optionally, in the system according to the system of the third aspect, the measurement information is received from the sensor prior to the first control circuit being switched to the activated state.

Optionally, in the system according to the system of the third aspect, the first control circuit is configured to cause a sensor to obtain measurement information and to transmit the obtained measurement information to the host terminal using the first communication circuit, when the first control circuit switches from the sleep state to the activated state.

According to a fourth aspect of the present application, it is provided a method of operating a wireless communication apparatus configured to communicate wirelessly with a host terminal, the method comprising:
switching a control circuit of the wireless communication apparatus from a sleep state, where the electric power from a battery is not supplied to a communication circuit of the wireless communication apparatus, to an activated state where the electric power from the battery is supplied to the communication circuit, when a wireless tag of the wireless communication apparatus is activated.

Optionally, in the method according to the fourth aspect of the present invention, the control circuit is switched from the sleep state to the activated state when the wireless tag is activated and a specific command that is transmitted from the host terminal is received by the wireless tag.

Optionally, in the method according to the fourth aspect of the present invention, the control circuit is switched from the activated state to the sleep state after a set time has expired, or after the apparatus receives a command.

Optionally, according to the fourth aspect, the method further comprises:
transmitting information that is stored in a memory of the apparatus, to the host terminal when the control circuit is switched from the sleep state to the activated state.

Optionally, according to the fourth aspect, the method further comprises causing a sensor to obtain measurement information and to transmit the obtained measurement information to the host terminal when the control circuit is switched from the sleep state to the activated state.

### DESCRIPTION OF THE DRAWINGS

FIG. 1 is a diagram illustrating an example of a wireless communication system according to some embodiments.
FIG. 2 is a diagram for describing an example of an arrangement of a host terminal according to some embodiments.
FIG. 3 is a diagram for describing an example of a wireless communication apparatus according to some embodiments.
FIG. 4 is a diagram for describing an example of operation of a wireless communication system according to some embodiments.
FIG. 5 is a diagram for describing an example of the operation of the wireless communication system according to some embodiments.

### DETAILED DESCRIPTION

An object of an exemplary embodiment is to provide a wireless communication apparatus, a host terminal, and a wireless communication system that are capable of saving electric power in a more convenient manner.

A wireless communication apparatus according to an embodiment, which communicates wirelessly with a host terminal, includes a power supply circuit, a communication circuit, a wireless tag, and a control circuit. The power supply circuit includes a battery. A communication circuit outputs a carrier wave to the host terminal using electric power of the battery, and performs wireless communication with the host terminal. A passive-type wireless tag is activated by the carrier wave which is output from the host terminal, and performs the wireless communication with the host terminal. A control circuit switches from a sleep state where the electric power from the battery is not supplied to the communication circuit to an activated state where the electric power from the battery is supplied to the communication circuit, if the wireless tag is activated.

A wireless communication apparatus, a host terminal, and a wireless communication system according to some embodiments will be described below with reference to the drawings.

### First Embodiment

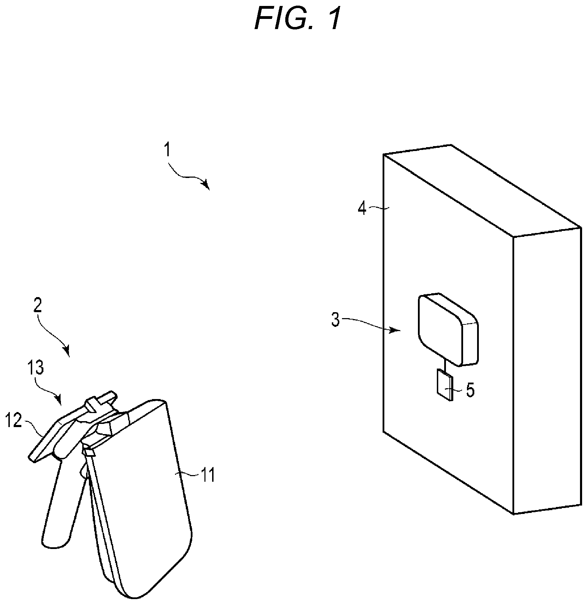

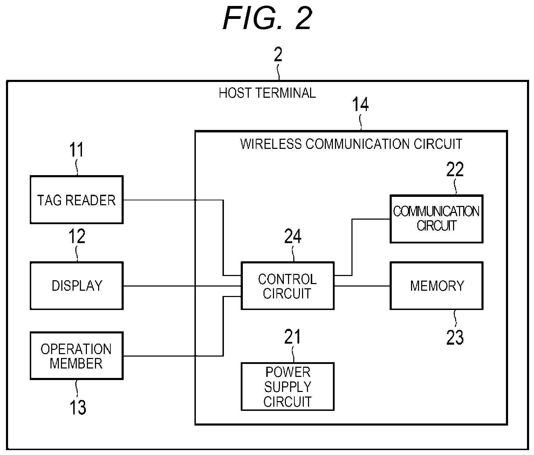

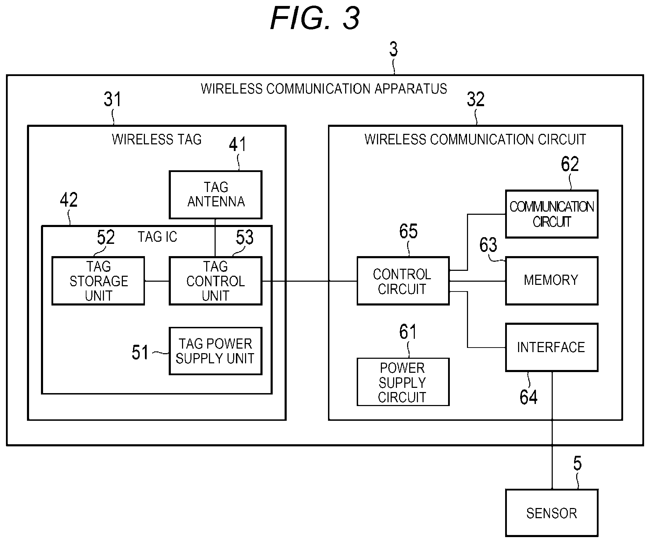

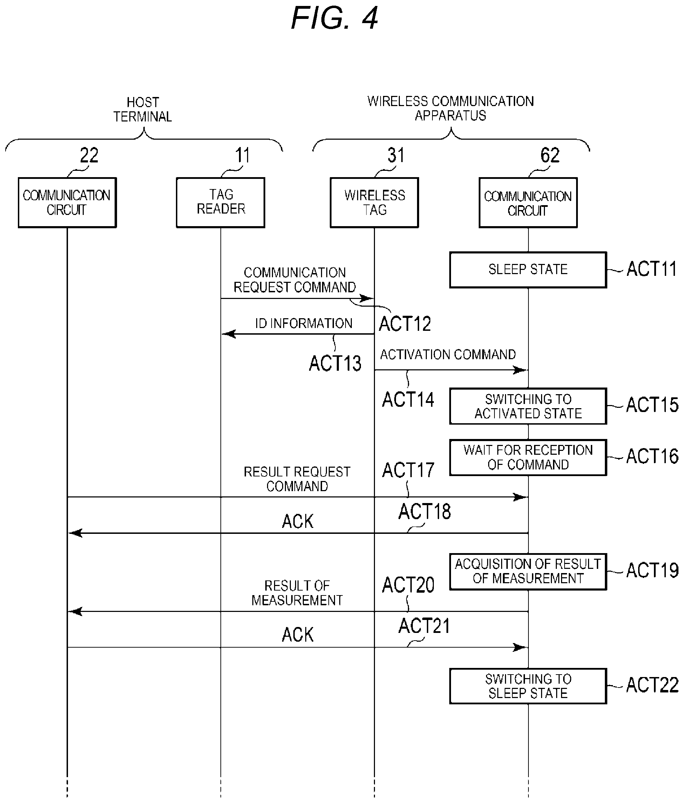

FIG. 1 is a descriptive diagram for describing an outline of a wireless communication system 1. FIG. 2 is a descriptive diagram for describing a host terminal 2. FIG. 3 is a descriptive diagram for describing a wireless communication apparatus 3. FIG. 4 is a descriptive diagram for describing operation of the wireless communication apparatus and the host terminal.

As illustrated in FIG. 1, the wireless communication system 1 includes the host terminal 2 and the wireless communication apparatus 3. The wireless communication system 1 is a system in which a result of measurement by a sensor 5 that is installed on a structure 4, for example, such as a road or a bridge pier, is transmitted in a wireless communication manner from the wireless communication apparatus 3, which is connected to the sensor 5, to the host terminal 2. The wireless communication system 1 is a system for operating the wireless communication apparatus 3 and the host terminal 2 while suppressing power consumption by the wireless communication apparatus 3, but not decreasing the convenience that is achieved when the host terminal 2 acquires the result of the measurement from the wireless communication apparatus 3.

The host terminal 2 communicates wirelessly with the wireless communication apparatus 3. The host terminal 2 causes the result of the measurement, which is acquired by the wireless communication apparatus 3 from the sensor 5, to be transmitted to the wireless communication apparatus 3.

The wireless communication apparatus 3 acquires the result of the measurement from the sensor 5. The wireless communication apparatus 3 communicates wirelessly with the host terminal 2. If the result of the measurement is required by the host terminal 2, the wireless communication apparatus 3 transmits the result of the measurement, which is acquired from the sensor 5, to the host terminal 2.

The sensor 5 measures a physical quantity such as temperature or vibration. The sensor 5 is installed on the structure 4 such as a road or a bridge pier. The sensor 5, for example, is a temperature sensor. Furthermore, the sensor 5, for example, is an acceleration sensor. The sensor 5 performs measurement of the physical quantity according to a command from the wireless communication apparatus 3. Furthermore, the sensor 5 supplies the result of the measurement according to the command from the wireless communication apparatus 3 to the wireless communication apparatus 3. The sensor 5 may be configured to be supplied with electric power from the wireless communication apparatus 3 and to perform the measurement of the physical quantity, and may be configured to include a battery inside itself. Furthermore, the sensor 5 may be an analog sensor that does not need electric power.

The host terminal 2 and the wireless communication apparatus 3 performs wireless communication using of any one of a first communication scheme and a second communication scheme.

The first communication scheme is a communication scheme for radio frequency identification (RFID), and is a scheme in which one apparatus (master) outputs a carrier wave and the other apparatus (slave) receives the carrier wave and thus is activated and replies with a response. In the first communication scheme, for example, an electromagnetic wave at a first frequency is used for communication. For example, the first communication scheme is a scheme that is defined in the ISO 18000-63 standard. In the first communication scheme, the apparatus that receives the carrier wave, although not configured to include the battery, generates induced current from the carrier wave or rectifies the carrier wave, and thus can operate.

The second communication scheme is a scheme in which an apparatus on the data transmitting side outputs the carrier wave. In the second communication scheme, for example, an electromagnetic wave at a second frequency is used for communication. For example, the second communication scheme is a scheme that is defined in the Institute of Electrical and Electronics Engineers (IEEE) 802.15.4g standard. Although a distance between an apparatus on the transmitting side and an apparatus on the receiving side is greater in the second communication scheme than in the first communication scheme, communication is possible. Furthermore, a larger amount of data can be transmitted in the second communication scheme than in the first communication scheme. However, the apparatus on the transmitting side, which is configured to output the carrier wave in the second communication scheme, consumes more electric power than does the slave apparatus in the first communication scheme.

The host terminal 2, as illustrated in FIG. 2, includes a tag reader 11, a display 12, an operation member 13, and a wireless communication circuit 14.

The tag reader 11 outputs an electromagnetic wave and thus performs communication with a wireless tag. The tag reader 11 performs communication with the wireless tag in the first communication scheme. The tag reader 11 may include an antenna and a signal processing circuit.

The antenna is an antenna that transmits and receives an electromagnetic wave. The antenna is configured in such a manner that a resonance frequency is the first frequency. The antenna of the tag reader 11, for example, is supplied with electric power from the wireless communication circuit 14 and outputs the electromagnetic wave, and thus the carrier wave is supplied to the wireless communication apparatus 3.

The signal processing circuit modulates the electromagnetic wave that is output from the antenna under the control of the wireless communication circuit 14, and thus, transmits data to another apparatus. Furthermore, based on the electromagnetic wave that is received by the antenna, the signal processing circuit modulates the data that is transmitted by the apparatus, and supplies the modulated data to the wireless communication apparatus 3.

With this arrangement, the tag reader 11 supplies the carrier wave from the antenna to a passive-type wireless tag that operates on the received electric power. Accordingly, the tag reader 11 causes the passive-type wireless tag to be activated. Moreover, the tag reader 11 transmits a command to the passive-type wireless tag, and causes the passive-type wireless tag to operate in accordance with the command. Moreover, the tag reader 11 receives, as a response, a result of the operation in accordance with the command, which is performed by the passive-type wireless tag. If only a specific wireless tag is caused to perform an operation in accordance with the command, in addition to the instruction to operate the wireless tag, an instruction to designate the wireless tag is transmitted along with identification information (ID). Accordingly, the tag reader 11 can cause the wireless tag, which is designated with the ID, to perform an operation in accordance with a command.

The display 12 is a display device on which a screen that is supplied from the wireless communication circuit 14 is displayed. For example, an operation screen for determining operation of the host terminal 2 is caused to be displayed on the display 12. Furthermore, the result of the measurement that is transmitted by the wireless communication apparatus 3 is displayed on the display 12.

The operation member 13 supplies an operation signal in accordance with an operation to the wireless communication circuit 14. The operation member 13, may be, for example, a touch sensor, a numeric keypad, a power key, a paper sheet feed key, various function keys, or a keyboard. The touch sensor may be, for example, a resistance file type touch sensor, an electrostatic capacity type touch sensor, or the like. The touch sensor acquires information indicating a position that is designated within a certain area. The touch sensor is configured as a touch panel that is integrally combined with the display 12, and thus, a signal indicating a touch position on the screen that is displayed on the display 12 is input into the wireless communication circuit 14.

The wireless communication circuit 14 outputs an electromagnetic wave, and thus performs communication with the wireless communication apparatus 3. The wireless communication circuit 14 performs communication with the wireless communication apparatus 3 in the second communication scheme. The wireless communication circuit 14 includes a power supply circuit 21, a communication circuit 22, a memory 23, and a control circuit 24.

The power supply circuit 21 includes a battery. The power supply circuit 21 supplies electric power of the battery to each unit of the host terminal 2. That is, the power supply circuit 21 supplies the electric power of the battery to the tag reader 11, the display 12, the operation member 13, and the wireless communication circuit 14.

The communication circuit 22 is a circuit for performing wireless communication with the wireless communication apparatus 3 in the second communication scheme. The communication circuit 22 includes an antenna and a signal processing circuit.

The antenna of the communication circuit 22 is an antenna that transmits and receives an electromagnetic wave. The antenna of the communication circuit 22 is configured in such a manner that a resonance frequency is the second frequency.

The signal processing circuit of the communication circuit 22 outputs an electromagnetic wave from the antenna using the electric power that is supplied from the power supply circuit 21. The signal processing circuit of the communication circuit 22 modulates the electromagnetic wave that is output from the antenna under the control of the control circuit 24, and thus transmits data to another apparatus. Furthermore, based on the electromagnetic wave that is received from the antenna, the signal processing circuit of the communication circuit 22 demodulates the data that is transmitted by the apparatus, and supplies the demodulated data to the control circuit 24.

The memory 23 includes a memory area in which various pieces of information are stored. The memory 23 includes a memory area to which the result of the measurement is written by the control circuit 24.

The control circuit 24 is a circuit that controls operations for various arrangements of the wireless communication circuit 14 and the host terminal 2. The control circuit 24 includes a computing element (for example, a CPU) that performs computing processing, and a memory in which a program that is executed by the computing element is stored, and is configured to perform various type control by the computing element executing the program. It is noted that the control circuit 24 may be configured as a combination of hardware pieces for various types of control.

The control circuit 24, for example, controls operation of the tag reader 11 in such a manner that the wireless communication in compliance with the first communication scheme is performed. If a prescribed operation is performed, the control circuit 24 controls the tag reader 11, and thus transmits a command for changing a state of the wireless communication apparatus 3 to the wireless communication apparatus 3 in the first communication scheme. It is noted that the command for changing the state of the wireless communication apparatus 3 is referred to as a communication request command.

Furthermore, the control circuit 24, for example, controls operation of the communication circuit 22 in such a manner that the wireless communication in compliance with the second communication scheme is performed. If a prescribed operation is performed, the control circuit 24 controls the communication circuit 22, and thus transmits a command that requests the result of the measurement by the sensor 5 to the wireless communication apparatus 3 in the second communication scheme. It is noted that a command for making a request to the wireless communication apparatus 3 for the result of the measurement by the sensor 5 is referred to as a result request command.

The wireless communication apparatus 3, as illustrated in FIG. 3, includes a wireless tag 31 and a wireless communication circuit 32.

The wireless tag 31 may be a passive-type wireless tag that operates on electric power that occurs due to the electromagnetic wave which is output from the host terminal 2. The wireless tag 31 performs communication with the tag reader 11 of the host terminal 2 in the first communication scheme. The wireless tag 31 includes a tag antenna 41 and a tag IC 42.

The tag antenna 41 is an antenna that transmits and receives an electromagnetic wave. The tag antenna 41 is configured in such a manner that a resonance frequency is the first frequency. The tag antenna 41 receives a wireless signal that is transmitted by the host terminal 2 through wireless communication and supplies the received wireless signal to the tag IC 42.

The tag IC 42 performs signal processing, computing processing, storing processing and the like, which relate to communication with the tag reader 11. The tag IC 42 includes a tag power source unit 51, a tag storage unit 52, and a tag control unit 53.

The tag power source unit 51 is a power supply circuit that rectifies the carrier wave which is received in the tag antenna 41 and supplies the rectified carrier wave, as electric power on which the tag IC 42 operates, to each unit.

The tag storage unit 52 is a memory in which data and a program are stored. Stored in the tag storage unit 52 are an identification information (ID) specific to the wireless communication apparatus 3 or specific to the wireless tag 31. Stored in the tag storage unit 52 is a program for performing processing in accordance with a command which is transmitted from the tag reader 11.

The tag control unit 53 performs various types of processing according to the wireless signal that is supplied from the tag antenna 41. The tag control unit 53 includes a computing element. The tag control unit 53 performs various types of processing by the computing element executing a program that is stored in the tag storage unit 52.

The tag control unit 53 decodes the wireless signal that is supplied from the tag antenna 41, and acquires the command that is transmitted by the tag reader 11 of the host terminal 2. The tag control unit 53 performs processing based on the command that is transmitted by the tag reader 11. Based on a result of the processing that is based on the command, the tag control unit 53 transmits a response to the tag reader 11 using the first communication scheme. If an instruction to designate a tag and an ID are included in the command which is transmitted by the tag reader 11, the tag control unit 53 compares the acquired ID with the ID that is stored in the tag storage unit 52. If the IDs are consistent with each other, the tag control unit 53 performs processing or response transmission that is based on the command which is transmitted by the tag reader 11.

For example, if the communication request command is received along with the instruction to designate the tag, the tag control unit 53 compares the ID that is included in the command with the ID that is stored in the tag storage unit 52. If the IDs are consistent with each other, the tag control unit 53 transmits an activation command to the wireless communication circuit 32. The activation command is a command for changing a state of operation of the wireless communication circuit 32. The activation command, for example, changes a level of a specific message or pulse signal, or a signal line from a low level to a high level or from a high level to a low level, and so on.

As described above, the wireless tag 31 is activated by the electric power that occurs due to the electromagnetic wave which is output from the tag reader 11 of the host terminal 2. Moreover, if the communication request command is received from the tag reader 11, the wireless tag 31 transmits the activation command to the wireless communication circuit 32, and thus changes the state of the operation of the wireless communication circuit 32.

The wireless communication circuit 32 outputs the electromagnetic wave, and performs wireless communication with the wireless communication circuit 14 of the host terminal 2. The wireless communication circuit 32 performs communication with the wireless communication circuit 14 of the host terminal 2 in the second communication scheme. The wireless communication circuit 32 includes a power supply circuit 61, a communication circuit 62, a memory 63, an interface 64, and a control circuit 65.

The power supply circuit 61 includes a battery. The power supply circuit 61 supplies electric power of the battery to each unit of the wireless communication circuit 32. That is, the power supply circuit 61 supplies the electric power of the battery to the communication circuit 62 and the control circuit 65. Furthermore, the power supply circuit 61 may be configured to supply the electric power of the battery to the sensor 5.

The battery that is included in the power supply circuit 61, for example, is a secondary battery. The power supply circuit 61 receives electric power from an apparatus that generates electric power in an environment-friendly manner, such as a solar battery that is not illustrated, and causes the secondary charge to be charged with the received electric power.

The communication circuit 62 is a circuit for performing wireless communication with the wireless communication circuit 14 of the host terminal 2 in the second communication scheme, using the electric power that is supplied from the power supply circuit 61. The communication circuit 62 includes an antenna and a signal processing circuit.

The antenna of the communication circuit 62 is an antenna that transmits and receives an electromagnetic wave. The antenna of the communication circuit 62 is configured in such a manner that a resonance frequency is the second frequency.

The signal processing circuit of the communication circuit 62 performs prescribed signal processing on a signal that is transmitted and received by the antenna. For example, the signal processing circuit modulates the electromagnetic wave that is output from the antenna in accordance with the control of the control circuit 65, and thus transmits data to another apparatus. Furthermore, for example, the signal processing circuit demodulates the signal that is received by the antenna, and acquires the data that is transmitted by the apparatus, and supplies the acquired data to the control circuit 65.

The memory 63 includes a memory area in which various pieces of information are stored. The memory 63 includes a memory area to which the result of the measurement is written by the control circuit 65.

The interface 64 is an interface for communicating with the sensor 5. The interface 64 supplies the result of the measurement that is supplied from the sensor 5 to the control circuit 65. Furthermore, the interface 64 supplies the command that is supplied from the control circuit 65 to the sensor 5. Moreover, the interface 64 also relays the electric power that is supplied by the power supply circuit 61 to the sensor 5.

The control circuit 65 is a circuit that controls operations for various configurations of the wireless communication circuit 32. The control circuit 65 includes a computing element (for example, a CPU) that performs computing processing, and a memory in which a program that is executed by the computing element is stored, and is configured to perform various types of control by the computing element executing the program. It is noted that the control circuit 65 may be configured as a combination of hardware pieces for various types of control.

The control circuit 65, for example, controls operation of the communication circuit 62 in such a manner that the wireless communication in compliance with the second communication scheme is performed. For example, if the control circuit 65 receives the result request command through the wireless communication in compliance with the second communication scheme, the control circuit 65 transmits the command through the interface 64 to the sensor 5, and thus causes the sensor 5 to perform measurement. When the measurement is ended in the sensor 5, the control circuit 65 acquires the result of the measurement from the sensor 5 through the interface 64. Moreover, the control circuit 65 transmits the acquired result of the measurement to the host terminal 2 through the wireless communication in compliance with the second communication scheme. Furthermore, the control circuit 65 may be configured to write the result of the measurement that is acquired from the sensor 5 to the memory 63.

The control circuit 65 causes the wireless communication circuit 32 to operate in an operation mode that is any one of a sleep state and an activated state.

The sleep state is a mode in which power consumption of the entire wireless communication circuit 32 is suppressed. Specifically, the sleep state is a mode in which the wireless communication is caused to be stopped in the wireless communication circuit 32. That is, if the sleep state is entered, a state where electric power is not supplied from the power supply circuit 61 to the communication circuit 62 is attained. That is, if the wireless communication circuit 32 is in the sleep state, the wireless communication apparatus 3 is in a state where the wireless communication in the first communication scheme is enabled and the wireless communication in a second wireless communication scheme is disabled. It is noted that if the wireless communication circuit 32 is in the sleep state, the control circuit 65 may be configured to stop all functions except a function of receiving the activation command from the tag control unit 53.

The activated state is a mode in which the wireless communication in the wireless communication circuit 32 is maintained to be in an operable state. That is, if the wireless communication circuit 32 is in the activated state, a state where the electric power from the power supply circuit 61 is supplied to the communication circuit 62. If the wireless communication circuit 32 is in the activated state, the wireless communication apparatus 3 is in a state where both the wireless communication in the first communication scheme and the wireless communication in the second wireless communication scheme are enabled. In this manner, the sleep state is an operation mode in which power consumption of the battery by the power supply circuit 61 can be more suppressed when compared with the activated state.

The control circuit 65 switches from the sleep state to the activated state according to a predetermined condition. For example, if the activation command is received from the wireless tag 31, the control circuit 65 switches from the sleep state to the activated state.

The control circuit 65 switches from the activated state to the sleep state according to a prescribed condition. For example, the control circuit 65 switches from the activated state to the sleep state after a fixed time elapsed from the last time any command is received in the second communication scheme. Furthermore, the control circuit 65 may be configured to switch from the activated state to the sleep state if a specific command is last received. Furthermore, the control circuit 65 may be configured in such a manner that the control circuit 65 transmits the result of the measurement to the host terminal 2, and that, when an acknowledgement (ACK), which is reception confirmation, is received, the control circuit 65 switches from the activated state to the sleep state.

Next, operation of each of the wireless communication apparatus 3 and the host terminal 2 will be described with reference to FIG. 4.

First, the wireless communication circuit 32 of the wireless communication apparatus 3 is assumed to be in the sleep state (ACT 11).

If a prescribed operation is performed by the operation member 13, the tag reader 11 of the host terminal 2 transmits the communication request command to the wireless communication apparatus 3 in the first communication scheme (ACT 12).

The wireless tag 31 of the wireless communication apparatus 3 is activated by the carrier wave that is output from the tag reader 11. If the tag control unit 53 of the wireless tag 31 is activated and receives the communication request command, the tag control unit 53 transmits ID information including the ID that is stored in the tag storage unit 52, to the tag reader 11 (ACT 13). Moreover, the tag control unit 53 supplies the activation command to the wireless communication circuit 32 of the wireless communication apparatus 3 (ACT 14).

When receiving the activation command, the control circuit 65 of the wireless communication circuit 32 changes the operation mode of the wireless communication circuit 32 from the sleep state to the activated state (ACT 15). That is, the control circuit 65 controls the power supply circuit 61 in such a manner that the electric power from the power supply circuit 61 is supplied to the communication circuit 62, and thus, changes the operation mode of the wireless communication circuit 32 from the sleep state to the activated state. While operating in the activated state, the control circuit 65 is in a state of waiting for the reception of the command in the second communication scheme (ACT 16).

If a prescribed operation is performed by the operation member 13, the wireless communication circuit 14 of the host terminal 2 transmits the result request command to the wireless communication apparatus 3 in the second communication scheme (ACT 17).

When receiving the result request command, the wireless communication circuit 32 of the wireless communication apparatus 3 transmits the ACK, which is reception confirmation, to the host terminal 2 (ACT 18). Moreover, the wireless communication circuit 32 transmits the command to the sensor 5, and thus causes the sensor 5 to perform the measurement. Accordingly, the wireless communication circuit 32 acquires the result of the measurement from the sensor 5 (ACT 19). When acquiring the result of the measurement from the sensor 5, the wireless communication circuit 32 transmits the acquired result of the measurement to the host terminal 2 in the second communication scheme (ACT 20).

When receiving the result of the measurement, the wireless communication circuit 14 of the host terminal 2 transmits the ACK, which is the reception confirmation, to the wireless communication apparatus 3 (ACT 21).

Moreover, the wireless communication circuit 32 of the wireless communication apparatus 3 receives the ACK from the host terminal 2, and then, if the communication does not take place within the time that is set in advance, transitions to the sleep state (ACT 22).

As described above, the wireless communication apparatus 3 includes the wireless tag 31 that obtains the electric power from the received carrier wave, operates on the obtained electric power, and performs the wireless communication with the host terminal 2 in the first communication scheme, and the wireless communication circuit 32 that operates on the electric power, which is supplied from the battery, and performs the wireless communication with the host terminal 2 in the second communication scheme. The wireless communication circuit 32 operates in any one of the sleep state where the wireless communication in the second communication scheme is not performed and the activated state where the wireless communication in the second communication scheme is possible. If the communication request command is received from the host terminal 2 in the first communication scheme, the wireless tag 31 inputs a command for causing the wireless communication circuit 32 to be in the activated state, into the wireless communication circuit 32. With this arrangement, in the sleep state where the power consumption is low when compared with the activated state where the transmission of the result of the measurement is possible, the wireless communication apparatus 3 can wait for the communication request command to be input from the host terminal 2 in the first communication scheme in which a command is receivable at all times. Moreover, if the communication request command is input from the host terminal 2 in the first communication scheme, the wireless communication apparatus 3 changes the operation mode from the sleep state to the activated state, and thus can transmit the result of the measurement to the host terminal 2 at an any timing. As a result, the wireless communication apparatus 3 that saves electric power in a more convenient manner can be provided.

Furthermore, if the communication request command is input from the host terminal 2 in the first communication scheme, the wireless communication apparatus 3 compares the ID, which is included in the communication request command, with the ID that is stored in itself. If the IDs are consistent with each other, the wireless communication apparatus 3 changes the operation mode from the sleep state to the activated state. With this configuration, although a plurality of wireless communication apparatuses are present in a communication range of the host terminal 2, any wireless communication apparatus can be caused to perform the measurement.

### Second Embodiment

Next, a second embodiment will be described. In the first embodiment, the wireless communication apparatus 3 is described as being configured in such a manner that the wireless communication apparatus 3 switches from the sleep state to the activated state and that, if the result request command which requests the transmission of the result of the measurement is received in the second communication scheme, the wireless communication apparatus 3 transmits the result of the measurement which is received from the sensor 5, to the host terminal 2, but embodiments are not limited to this arrangement. The wireless communication apparatus 3 may be configured to transmit the result of the measurement to the host terminal 2 without receiving the result request command when switching from the sleep state to the activated state. It is noted that because the second embodiment has the same arrangement as the first embodiment, a detailed description thereof is omitted.

The control circuit 65 of the wireless communication circuit 32 stores a schedule that is acquired in advance, in the memory 63. The schedule is information indicating a timing at which the sensor 5 is caused to perform the measurement. Specifically, the schedule is information indicating a date and time or a time interval, or the like.

The control circuit 65 checks items shown on the schedule, one after another, when the wireless communication circuit 32 is in the sleep state. The control circuit 65 inputs the command for causing the sensor 5 to perform the measurement at the timing that is based on the schedule that is stored in the memory 63. Accordingly, the control circuit 65 acquires the result of the measurement from the sensor 5 at the timing that is based on the schedule which is stored in the memory 63, and accumulates the results of the measurement in the memory 63. Accordingly, the wireless communication circuit 32 accumulates the results of the measurement by the sensor 5 in the memory 63, according to the schedule that is determined in advance.

If the communication request command is input from the host terminal 2 into the wireless tag 31 in the first communication scheme, and the activation command is input from the wireless tag 31, the control circuit 65 causes the wireless communication circuit 32 to switch from the sleep state to the activated state. Moreover, if the wireless communication circuit 32 is caused to switch from the sleep state to the activated state, the control circuit 65 transmits the results of the measurement that are accumulated in the memory 63, to the host terminal 2 in the second communication scheme.

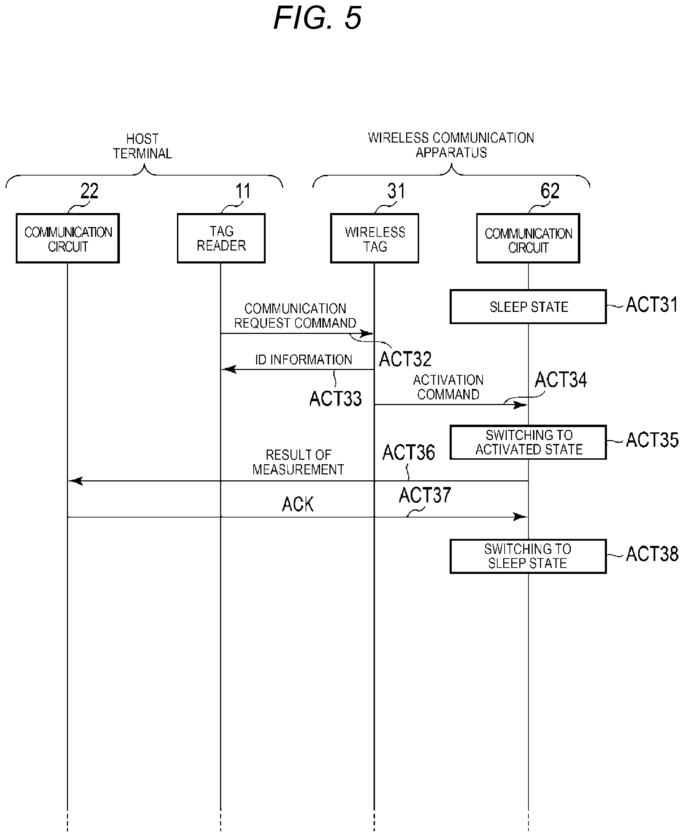

FIG. 5 is a diagram showing the operation of each of the wireless communication apparatus 3 and the host terminal 2 according to the second embodiment.

First, the wireless communication circuit 32 of the wireless communication apparatus 3 is assumed to be in the sleep state (ACT 31).

If a prescribed operation is performed by the operation member 13, the tag reader 11 of the host terminal 2 transmits the communication request command to the wireless communication apparatus 3 in the first communication scheme (ACT 32).

The wireless tag 31 of the wireless communication apparatus 3 is activated by the carrier wave that is output from the tag reader 11. If the tag control unit 53 of the wireless tag 31 is activated and receives the communication request command, the tag control unit 53 transmits ID information including the ID that is stored in the tag storage unit 52, to the tag reader 11 (ACT 33). Moreover, the tag control unit 53 supplies the activation command to the wireless communication circuit 32 of the wireless communication apparatus 3 (ACT 34).

When receiving the activation command, the control circuit 65 of the wireless communication circuit 32 changes the operation mode of the wireless communication circuit 32 from the sleep state to the activated state (ACT 35). That is, the control circuit 65 controls the power supply circuit 61 in such a manner that the electric power from the power supply circuit 61 is supplied to the communication circuit 62, and thus, changes the operation mode of the wireless communication circuit 32 from the sleep state to the activated state. Moreover, the control circuit 65 transmits the results of the measurement, which are accumulated in the memory 63, to the host terminal 2 in the second communication scheme (ACT 36) .

When receiving the result of the measurement, the wireless communication circuit 14 of the host terminal 2 transmits the ACK, which is the reception confirmation, to the wireless communication apparatus 3 (ACT 37).

Moreover, the wireless communication circuit 32 of the wireless communication apparatus 3 receives the ACK from the host terminal 2, and then, if the communication does not take place within the time that is set in advance, transitions to the sleep state (ACT 38).

As described above, the wireless communication circuit 32 of the wireless communication apparatus 3 operates in any one of the sleep state where the result of the measurement is acquired from the sensor 5 based on the schedule that is set in advance, without performing the wireless communication in the second communication scheme, and the activated state in which the wireless communication in the second communication scheme is possible. If the communication request command is received from the host terminal 2 in the first communication scheme, the wireless tag 31 inputs the command for causing the wireless communication circuit 32 to be in the activated state, into the wireless communication circuit 32. If the activation command is input from the wireless tag 31, the wireless communication circuit 32 not only switches from the sleep state to the activate state, but also transmits the results of the measurement, which are accumulated in the memory 63, to the host terminal 2 in the second communication scheme. With this configuration, the wireless communication apparatus 3 collects the results of the measurement that are acquired from the sensor 5 while in the sleep state, and can transmit the collected results of the measurement when the communication with the host terminal 2 is possible. As a result, the convenience can be further improved.

It is noted that in the first and second embodiments described, the wireless tag 31 is described as being configured in such a manner that, if the communication request command is received, the wireless tag 31 supplies the activation command to the wireless communication circuit 32, but embodiments are not limited to this configuration. The wireless tag 31 may be configured in such a manner that, if a specific value is written to a specific area of the tag storage unit 52, the activation command is supplied to the wireless communication circuit 32 according to the command from the host terminal 2. Furthermore, the wireless tag 31 may be configured in such a manner that, without depending upon the reception of the communication request command, the wireless tag 31 supplies the activation command to the wireless communication circuit 32 if the wireless tag 31 receives the carrier wave from the host terminal 2 and is activated.

It is noted that the functions which are described in each embodiment described above can also be realized by causing a computer to read a program that results from programming each function using software, without remaining configured using hardware. Furthermore, each function may be configured by selecting any one of suitable software and hardware.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A wireless communication apparatus configured to communicate wirelessly with a host terminal, comprising:
a power supply circuit configured to include a battery;
a communication circuit configured to output a carrier wave to the host terminal using electric power of the battery, and to perform wireless communication with the host terminal;
a passive-type wireless tag configured to be activated by a carrier wave which is output from the host terminal, and to perform wireless communication with the host terminal; and
a control circuit configured to switch from a sleep state, where the electric power from the battery is not supplied to the communication circuit, to an activated state where the electric power from the battery is supplied to the communication circuit, when the wireless tag is activated.

2. The apparatus according to claim 1,
wherein the control circuit is configured to switch from the sleep state to the activated state when the wireless tag is activated and a specific command that is transmitted from the host terminal is received by the wireless tag.

3. The apparatus according to claim 2,
wherein the control circuit is configured to switch from the activated state to the sleep state after a set time has expired, or after the apparatus receives a specific command.

4. The apparatus according to any of claims 1 to 3, further comprising:
a memory in which information is stored,
wherein the control circuit is configured to transmit the information that is stored in the memory, to the host terminal using the communication circuit, when the control circuit switches the sleep state to the activated state.

5. The apparatus according to claim 4, wherein the information is measurement information received from a sensor.

6. The apparatus according to claim 5, wherein the measurement information is received from the sensor prior to the control circuit being switched to the activated state.

7. The apparatus according to any of claims 1 to 6, wherein the control circuit is configured to cause a sensor to obtain measurement information and to transmit the obtained measurement information to the host terminal using the communication circuit, when the control circuit switches the sleep state to the activated state.

8. A host terminal configured to communicate wirelessly with a wireless communication apparatus, comprising:
a tag reader configured to cause a wireless tag, which is included in the wireless communication apparatus, to be activated and to perform wireless communication with the wireless tag;
a second communication circuit configured to perform wireless communication with a first communication circuit that is included in the wireless communication apparatus; and
a control circuit configured to transmit a specific command to the wireless tag of the wireless communication apparatus using the tag reader, to cause the first communication circuit of the wireless communication apparatus to be activated, and to cause the second communication circuit to perform the wireless communication with the first communication circuit.

9. The host terminal according to claim 8, wherein the control circuit is configured to transmit, in addition to the specific command, identification information to designate only a wireless tag with matching identification information.

10. A wireless communication system that includes a host terminal and a wireless communication apparatus which communicates wirelessly with the host terminal,
wherein the wireless communication apparatus includes:
a power supply circuit configured to include a battery,
a first communication circuit configured to output a carrier wave to the host terminal using electric power of the battery and to perform wireless communication with the host terminal,
a passive-type wireless tag configured to be activated by a carrier wave which is output from the host terminal, and to perform the wireless communication with the host terminal; and
a first control circuit configured to switch from a sleep state where the electric power from the battery is not supplied to the first communication circuit to an activated state where the electric power from the battery is supplied to the first communication circuit, when the wireless tag is activated, and
wherein the host terminal includes:
a tag reader configured to cause the wireless tag to be activated and to perform wireless communication with the wireless tag, and
a second communication circuit configured to perform wireless communication with the first communication circuit.

11. The system according to claim 10,
wherein the first control circuit is configured to switch from the activated state to the sleep state after a set time has expired, or after the apparatus receives a specific command.

12. The system according to claim 10 or 11, the wireless communication apparatus further comprising a memory in which information is stored,
wherein the first control circuit is configured to transmit the information that is stored in the memory, to the host terminal using the first communication circuit, when the first control circuit switches the sleep state to the activated state.

13. The system according to claim 12, wherein the information is measurement information received from a sensor.

14. The system according to any of claims 10 to 13, wherein the first control circuit is configured to cause a sensor to obtain measurement information and to transmit the obtained measurement information to the host terminal using the first communication circuit, when the first control circuit switches from the sleep state to the activated state.

15. A method of operating a wireless communication apparatus configured to communicate wirelessly with a host terminal, the method comprising:
switching a control circuit of the wireless communication apparatus from a sleep state, where the electric power from a battery is not supplied to a communication circuit of the wireless communication apparatus, to an activated state where the electric power from the battery is supplied to the communication circuit, when a wireless tag of the wireless communication apparatus is activated.
